Europäisches Patentamt

European Patent Office

Office européen des brevets

(11) Publication number: **0 455 816 A1**

## EUROPEAN PATENT APPLICATION
### published in accordance with Art. 158(3) EPC

(21) Application number: 90916376.8

(22) Date of filing: 09.11.90

(86) International application number:
PCT/JP90/01462

(87) International publication number:
WO 91/08529 (13.06.91 91/13)

(51) Int. Cl.5: **G05B 19/403**

(30) Priority: 24.11.89 JP 305473/89

(43) Date of publication of application:
13.11.91 Bulletin 91/46

(84) Designated Contracting States:
**DE FR GB**

(71) Applicant: **FANUC LTD.**
**3580, Shibokusa Aza-Komanba Oshinomura**
**Minamitsuru-gun, Yamanashi 401-05(JP)**

(72) Inventor: **FUJITA, Naoki, FANUC Mansion**
**Harimomi 6-203**
**3537-1, Shibokusa, Oshinomura**
**Minamitsuru-gun, Yamanashi 401-05(JP)**
Inventor: **MATSUMURA, Teruyuki**
**38-8, Matsugaya**
**Hachioji-shi, Tokyo 192-03(JP)**
Inventor: **NAGASHIMA, Noritake, FANUC**
**Mansion Harimomi 8-303**
**3511-1, Shibokusa, Oshinomura**
**Minamitsuru-gun, Yamanashi 401-05(JP)**

(74) Representative: **Brunner, Michael John et al**
**GILL JENNINGS & EVERY 53-64 Chancery**
**Lane**
**London WC2A 1HN(GB)**

(54) **END SHAPE DATA INPUT SYSTEM.**

(57) This invention relates to an end shape data input system in an ineractive numeric controller. A question for defining the center point (P2) of a product is set with reference to the center point (P1) of the end face of a work, and the coordinate data are inputted to define the center point (P2). The shape data are inputted with reference to the defined center point (P2). An interactive numeric controller converts the inputted shape data to the coordinates with reference to the defined center point (P2) and prepares a final machining program.

EP 0 455 816 A1

Fig. 1

## TECHNICAL FIELD

The present invention relates to an end surface configuration data input system in an interactive type numerical control apparatus or interactive type program creation apparatus, and more specifically, to an end surface configuration data input system by which configuration data is input by providing a configuration definition center at a location other than an end surface center of a workpiece.

## BACKGROUND ART

A machine program can be simply created by an interactive type numerical control apparatus or interactive type program creation apparatus, by selecting a necessary configuration of a raw material and inputting configuration data, a workpiece material and the like in response to queries from the numerical control apparatus and the like, and thus such an apparatus is widely used as a machining program creating tool.

On the other hand, when a machine program is created by which a machine by a numerical control lathe of the end surface of a bar material is carried out, an interactive type program is used to drill a hole in the circumferential end surface of the bar material and machine a groove or cutoff to the end surface thereof. In this case, since the end surface is machined by the operation of the C axis and X axis, the end surface configuration thereof is generally referred to as a C axis end surface configuration: here it will be simply referred to as an end surface configuration.

Nevertheless, when the configuration data of a hole, groove and the like is input to the interactive type program, an end surface center, i.e., a circle center is used as a configuration definition center, and thus when configuration data having a point other than the end surface center as the configuration definition center is used, the configuration data must be input after being converted to data having the circle center as the configuration definition data, and as a result, an object of the interactive type numerical control apparatus and the like, which is to simply create a machine program, cannot be attained.

## DISCLOSURE OF THE INVENTION

Taking the above into consideration, an object of the present invention is to provide an end surface configuration data input system by which configuration data is input by providing a configuration definition center at a location other than the end surface center of a workpiece.

To solve the above problem, according to the present invention, there is provided an end surface configuration data input system in a interactive type numerical control apparatus or interactive type program creation apparatus, which comprises the steps of providing a query on the defining of a configuration definition center on the basis of an end surface center, defining the configuration definition center by inputting the coordinate data of the configuration definition center in response to the query, and creating a machine program by inputting configuration data on the basis of the configuration definition center.

Namely, a query on the defining of a point other than the end surface center is provided, and the operator inputs the coordinate of the configuration definition center in response to the query, to thereby create the configuration definition center other than the end surface center, and then the configuration data is input on the basis of the configuration definition center. The interactive type numerical control apparatus converts the configuration data, input on the basis of the configuration definition center, into a coordinate on the basis of the end surface center, to thereby create a final machining program.

## BRIEF DESCRIPTION OF THE DRAWINGS

Figure 1 is a diagram showing an example of a display screen when configuration data is input to drill holes on the circumference of a circle according to an embodiment of the present invention;
Figure 2 is a diagram showing a data input screen when the configuration data of Figure 1 is input;
Figure 3 is a diagram showing an example in which a groove is machined to an end surface;
Figure 4 is a diagram showing a data input screen when the configuration data of Figure 3 is input; and
Figure 5 is a schematic arrangement of the hardware of an interactive type numerical control apparatus embodying the present invention.

## BEST MODE OF CARRYING OUT THE INVENTION

An embodiment of the present invention will be described below with reference to drawings.

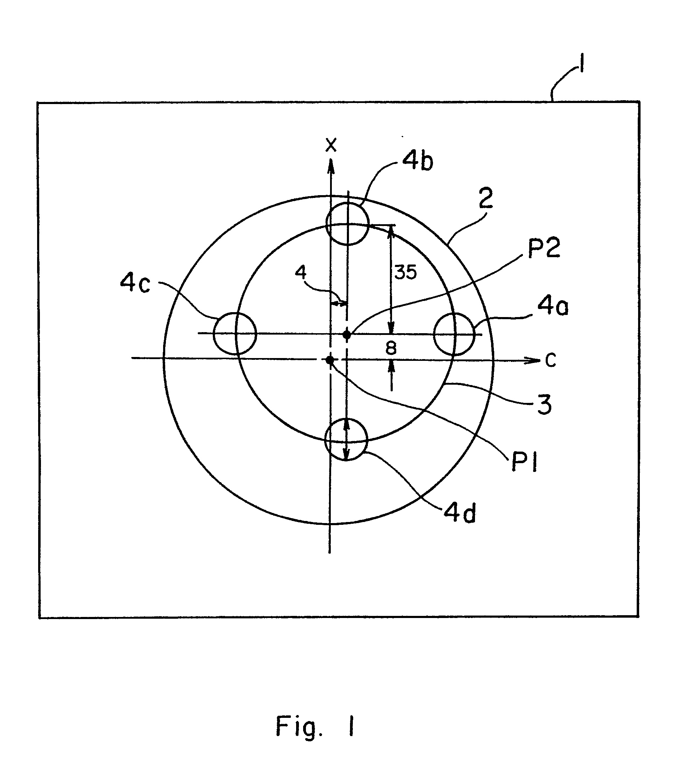

Figure 1 is a diagram showing an example of a display screen when configuration data is input to drill holes on the circumference of a circle according to an embodiment of the present invention. A display screen 1 displays a circle 2 having a diameter of 100 mm and encompassing the end surface of a workpiece, and shows a circle 3 having a radius of 35 mm and drawn therein about a configuration definition center P2, the configuration definition center P2 being offset from the center P1 of the circle 2 in the C direction by 4 mm and in the X direction by 8 mm, and 4 holes 4a, 4b, 4c and 4d are drilled along the circumference of the circle 3. When this hole drilling data is to be input, first a query is provided on the defining of the configuration definition center P2 on the basis of the end surface center P1, and accordingly, the operator inputs the coordinate data of the configuration definition center to define the configuration definition center, and further, inputs configuration data on the basis of the configuration definition center P2. An interactive type numerical control apparatus then converts the input configuration data into data of a coordinate system on the basis of the end surface center and creates a final machining program.

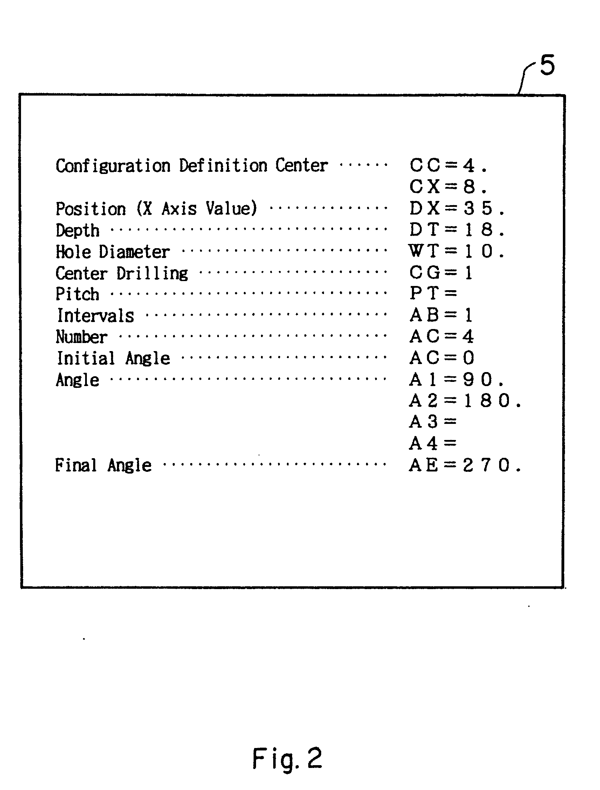

Figure 2 is a diagram showing a data input screen when the configuration data of Figure 1 is input, wherein a display screen 5 shows the data of each item and necessary data is input to the item through a not shown operation key. The details of each item will be described below.

(a) Configuration Definition Center: the coordinate value of the configuration definition center P2 from the end surface center P1 is input in response to a query on the defining of the configuration definition center, i.e., 4 mm (CC = 4 ) in the C axis direction and 8 mm (CX = 8) in the X axis direction;

(b) Position (X Axis Value): the radius of the circle 3 is designated on the basis of the configuration definition center P2, i.e., the radius is 35 mm (DX = 35);

(c ) Depth: the depth of the drilled holes is 18 mm (DT = 18);

(d) Hole Diameter: 10 mm (WT = 10);

(e) Center Drilling: this is the definition of whether or not center drilling must be effected: here it is effected (CG = 1);

(f) Pitch: a screw pitch is designated when tapping is effected: tapping is not effected in this case, and thus no pitch is defined;

(g) Intervals: the intervals between holes are designated. When the holes are to be drilled at the same intervals, "0" is input, and in other cases, "1" is input. In this case "1" is input because the angle of the respective holes is additionally defined as described below, although they are shown as drilled at the same intervals in Figure 1;

(h) Number: the number of holes, in this case 4, is input (AC = 4);

(i) Initial Angle: the angle of a first hole, in this case 0, is input (AC = 0);

(j) Angle: the angle of the respective holes is input; in this case the second angle is 90° (A1 = 90) and the third angle is 180° (A2 = 180);

and

(k) Final Angle: the angle of a final hole, in this case 270°, is input (AE = 270).

Although the input data is displayed independently of the display of the workpiece configuration in the figure, it is possible to display same at the same display screen.

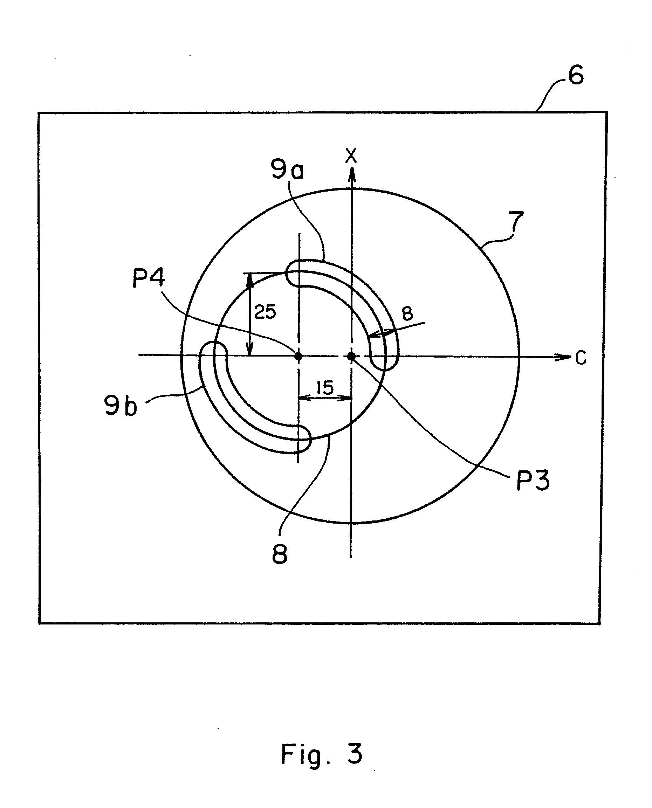

Figure 3 is a diagram showing an example in which grooves are machined to the end surface. A display screen 6 displays a circle 7 having a diameter of 100 mm and encompassing the end surface of a workpiece, and shows a circle 8 having a radius of 25 mm and drawn therein about a configuration definition center P4 offset from the end surface center P3 of the circle 7 in the C direction by -15 mm, and 2 grooves 9a and 9b are machined along the circumference of the circle 8. When this hole drilling data is to be input, first data for defining the configuration definition center P4 is input on the basis of the end surface center P3 and then configuration data is input on the basis of the configuration definition center P4.

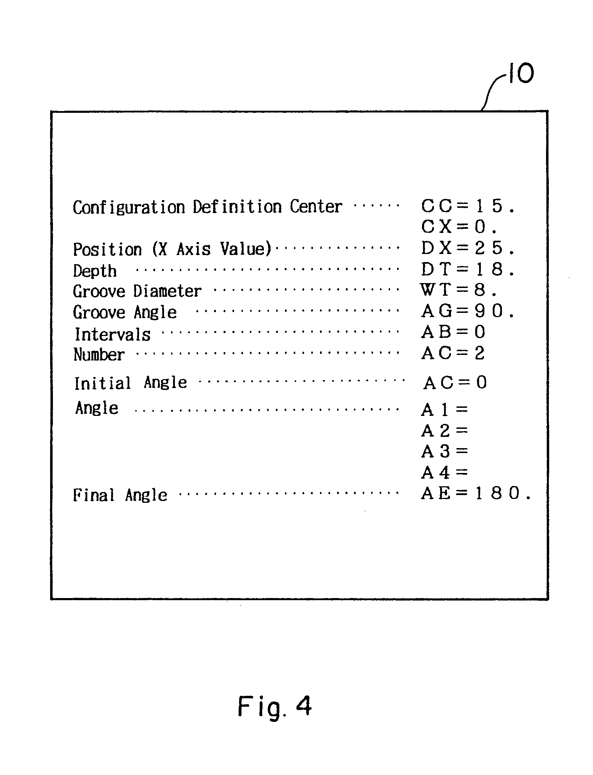

Figure 4 is a diagram showing a data input screen when the configuration data of Figure 3 is input, wherein a display screen 10 displays the data of each item and data necessary to the item is input through a not shown operation key. The details of each item are substantially the same as shown in Figure 2 except that a groove angle is 90°, and represents a groove length by angle. Further, the initial angle of the groove is defined on the basis of the groove start point and the final angle thereof is also defined in the same manner: in this case 180° (AE = 180). The other items are not described here as they can be easily assumed from Figure 2.

Although holes drilled and grooves machined to the end surface are described above, data for machining a cutoff also can be input by defining the configuration definition center.

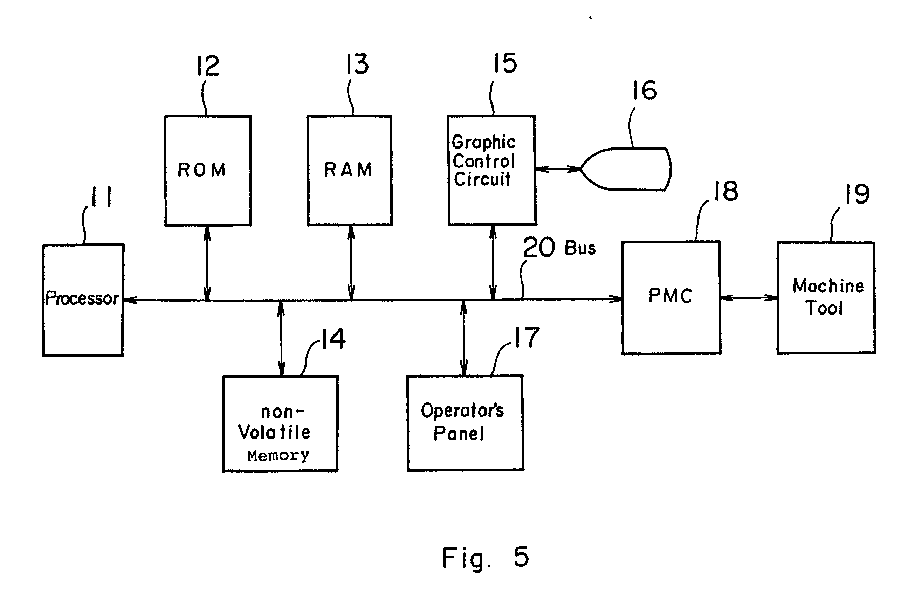

Figure 5 is a schematic arrangement of the hardware of the interactive type numerical control apparatus embodying the present invention. A processor 11 controls the numerical control apparatus as a whole, in accordance with a system program stored in a ROM 12. The ROM 12 is an EPROM or EEPROM, and the RAM 13 is a DRAM or the like in which various data or I/O signals are stored. A non-volatile memory 14 is composed of a CMOS which stores amounts of parameters, pitch error correction, tool correction and the like, and these data are maintained even after a power supply to the numerical control apparatus is cut off, because the CMOS is supplied with power from a battery and is a non-volatile memory.

A graphic control circuit 15 converts digital signals into signals for display, and supplies those signals to a display 16. A CRT or liquid crystal display is used as the display 16, to display the position of each axis, the state of I/O signals, parameters and the like. An operator's panel 17 composed of a keyboard of the like is used to interactively input various data or operate a machine tool 19.

A programmable machine controller (PMC) 18 receives output signals through a bus 20 and processes same by a sequence program, to thereby control the machine tool 19. Further, the PMC 18 receives input signals from the machine tool, processes these signals by the sequence program, and transfers same to the processor 11 through the bus 20.

These components are interconnected through the bus 20.

Note that Figure 5 does not show components such as axis control circuits, servo amplifiers, servo motors, spindle amplifiers, spindles motors, and the like. Further, a plurality of the processors may be used, to provide a multi-processing system. Furthermore, an interactive type program creation apparatus also can create the machining program in the same manner.

As described above, according to the present invention, since configuration data is input by defining the configuration definition center, a machining program can be easily created even if the configuration definition center is different from an end surface center.

**Claims**

1. An end surface configuration data input system in an interactive type numerical control apparatus or interactive type program creation apparatus, comprising the steps of:

   providing a query on a defining of a configuration definition center on the basis of an end surface center;

   defining said configuration definition center by inputting the coordinate data of said configuration definition center in response to said query; and

   creating a machining program by inputting configuration data on the basis of said configuration definition center.

2. An end surface configuration data input system according to claim 1, wherein said configuration data concerns holes along a circumference of a circle about said configuration definition center.

3. An end surface configuration data input system according to claim 2, wherein said configuration data of said holes at least includes a depth, number, spacing and initial angle of said holes.

4. An end surface configuration data input system according to claim 1, wherein at least data indicating whether or not center drilling is needed at said holes is input in addition to said configuration data.

5. An end surface configuration data input system according to claim 1, wherein said configuration data concerns grooves along a circumference of a circle about said configuration definition center.

6. An end surface configuration data input system according to claim 5, wherein said configuration data of said grooves at least includes a depth, groove diameter and groove angle of said grooves.

Fig. 1

5

```
Configuration Definition Center ······   CC=4.
                                         CX=8.
Position (X Axis Value) ············    DX=35.
Depth ···························         DT=18.
Hole Diameter ····················      WT=10.
Center Drilling ··················      CG=1
Pitch ························           PT=
Intervals ·······················       AB=1
Number ························           AC=4
Initial Angle ···················        AC=0
Angle ·························           A1=90.
                                         A2=180.
                                         A3=
                                         A4=
Final Angle ·····················       AE=270.
```

Fig. 2

Fig. 3

~10

```
Configuration Definition Center ······   CC=15.
                                         CX=0.
Position (X Axis Value)···········       DX=25.
Depth    ····················           DT=18.
Groove Diameter ················         WT=8.
Groove Angle   ················          AG=90.
Intervals ····················           AB=0
Number ····················              AC=2

Initial Angle ·················          AC=0

Angle    ····················            A1=
                                         A2=
                                         A3=
                                         A4=
Final Angle ·················            AE=180.
```

Fig. 4

9

Fig. 5

EP 0 455 816 A1

# INTERNATIONAL SEARCH REPORT

International Application No PCT/JP90/01462

**I. CLASSIFICATION OF SUBJECT MATTER** (if several classification symbols apply, indicate all) °

According to International Patent Classification (IPC) or to both National Classification and IPC

Int. Cl$^5$  G05B19/403

**II. FIELDS SEARCHED**

| Minimum Documentation Searched [7] | |
|---|---|
| Classification System | Classification Symbols |
| IPC | G05B19/403 |

Documentation Searched other than Minimum Documentation
to the Extent that such Documents are Included in the Fields Searched °

| | |
|---|---|
| Jitsuyo Shinan Koho | 1926 – 1990 |
| Kokai Jitsuyo Shinan Koho | 1971 – 1990 |

**III. DOCUMENTS CONSIDERED TO BE RELEVANT** °

| Category ° | Citation of Document, [11] with indication, where appropriate, of the relevant passages [12] | Relevant to Claim No. [13] |
|---|---|---|
| Y | JP, A, 60-229112 (Mitsubishi Electric Corp.), November 14, 1985 (14. 11. 85), Line 17, upper left column to line 19, upper right column, page 2 (Family: none) | 1-6 |
| Y | JP, A, 63-709 (Matsushita Electric Ind. Co., Ltd.), January 5, 1988 (05. 01. 88), Line 11, upper right column to line 12, lower left column, page 2 (Family: none) | 1-4 |
| Y | JP, U, 62-5309 (Amada Co., Ltd.), January 13, 1987 (13. 01. 87), (Family: none) | 1-6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 5, 1991 (05. 02. 91) | February 18, 1991 (18. 02. 91) |
| International Searching Authority | Signature of Authorized Officer |
| Japanese Patent Office | |

Form PCT/ISA/210 (second sheet) (January 1985)